(19) Europäisches Patentamt

European Patent Office

Office européen des brevets

(11) EP 0 654 915 B1

(12) EUROPEAN PATENT SPECIFICATION

(45) Date of publication and mention
of the grant of the patent:
**18.01.2006 Bulletin 2006/03**

(51) Int Cl.:
*H04B 7/08* (2006.01)   *H04B 7/10* (2006.01)

(21) Application number: **94308243.8**

(22) Date of filing: **09.11.1994**

(54) **Multipathreception using matrix calculation and adaptive beamforming**

Mehrwegeempfang unter Verwendung von Matrizenberechnungen und adaptiver Strahlbildung

Réception par trajets multiples utilisant des calculations de matrices et formation de faisceau adaptive

(84) Designated Contracting States:
**DE FR GB IT**

(30) Priority: **19.11.1993 US 154773**

(43) Date of publication of application:
**24.05.1995 Bulletin 1995/21**

(73) Proprietor: **AT&T Corp.**
**New York, NY 10013-2412 (US)**

(72) Inventor: **Pal, Debajyoti**
**Middletown,**
**New Jersey 07748 (US)**

(74) Representative: **Sarup, David Alexander et al**
**Lucent Technologie NS UK Limited**
**5 Mornington Road**
**Woodford Green, Essex IG8 0TU (GB)**

(56) References cited:
**EP-A- 0 352 787**      **US-A- 5 218 359**

EP 0 654 915 B1

## Description

This invention relates to methods of receiving communication signals.

Many communications systems such as cellular systems and TDMA (Time Division Multiple Access) systems suffer from a performance loss which results from multiple signal paths between a receiver and transmitter. This problem is often referred to as inter-symbol interference in communication systems that transmit information using symbols. Prior communication systems address this problem using a receiver that includes an adaptive equalizer which compensates for channel conditions such as multi-path conditions. Adaptive equalization techniques are discussed in "Adaptive Equalization for TDMA Digital Mobile Radio", J. G. Proakis, IEEE Transactions on Vehicular Technology, pp. 333-41, Vol. 40, No. 2, May 1991. When a system includes moving receivers, such as a receiver in an automobile, channel conditions may change relatively quickly and result in improper compensation by the receiver's equalizer. For example, an automobile's motion may result in improper compensation by losing or gaining signal paths at a rate that is faster than the rate at which the equalizer can adapt. As a result, when a signal path is lost, a receiver's performance is degraded by both the improper compensation of the receiver's equalizer and by the loss of signal power provided by the lost signal path, and when a signal path is gained, improper compensation may result in inter-symbol interference.

US-A-5218359 discloses an adaptive array antenna having a plurality of antenna elements, related weight circuits for weighting amplitude and phase of receive signal by each antenna element, and a combiner for combining weighed signals, and a plurality of antenna beams at the same time by determining weights of said weight circuits, so that a plurality of receive signals due to multipath transmission are received for obtaining high receive level while avoiding multipath interference. Receive signals are converted to digital form, which is stored in a memory for calculation, in which it is first determined whether a receive signal in each beam direction exists or not, selecting at least one direction beam in which receive signal in that direction beam has less mutual delay time from reference signal in reference direction beam than a predetermined delay time, adjusting phase of all the selected direction beams which have selected receive signal so that receive phase of all the selected direction beams are in phase, and determining weights of said weight circuit so that the antenna as a plurality of direction beams simultaneously for the selected receive signals.

According to one aspect of this invention there is provided a method as claimed in claim 1.

According to another aspect of this invention there is provided a method as claimed in claim 2.

The present invention reduces interference resulting from multiple signal paths by separating signals that arrive via different paths, time aligning the signals and adding the signals to maximize the output signal-to-noise ratio. The invention uses signals from multiple antenna elements to determine the angles of arrival of each signal path. It also uses a beam-forming network to form receive beams corresponding to the angles of arrival.

When a receiver utilizing the present invention encounters a loss of a signal path, it loses the signal power associated with that path, but avoids the additional performance loss that results from improper compensation by an equalizer. In addition, when a new signal path is encountered, the additional path does not result in inter-symbol interference.

## Brief Description of the Drawings

FIG. 1 illustrates a multi-path environment;
FIG. 2 illustrates angles of arrival;
FIG. 3 is a block diagram of a receiver,
FIG. 4 illustrates a beam forming network,
FIG. 5 illustrates a unit circle and polynomial roots; and
FIG. 6 illustrates a front view and a rear view of a cellular telephone.

## Detailed Description

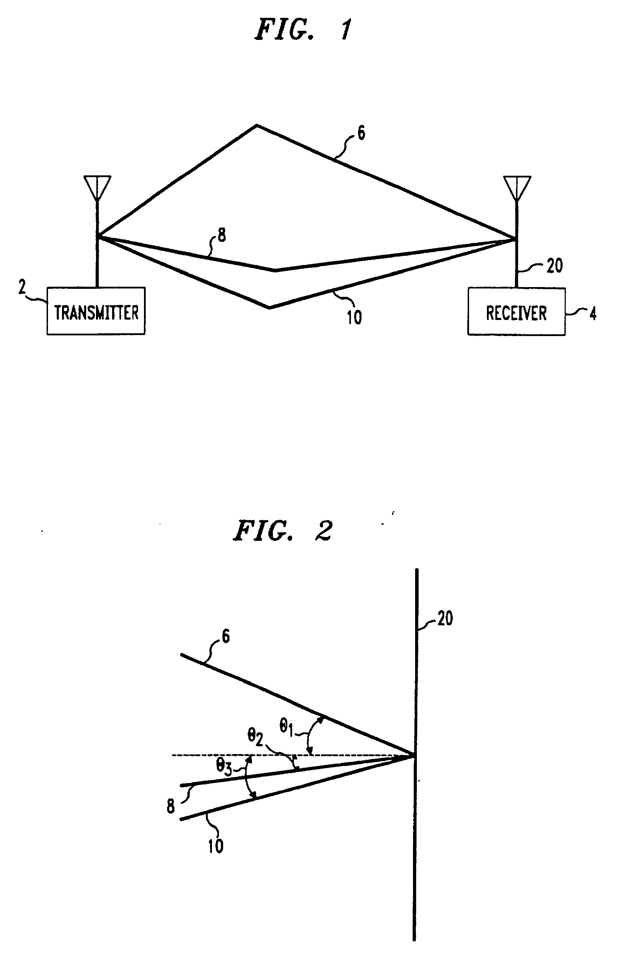

FIG.1 illustrates transmitter 2 transmitting a signal to receiver 4 in a multi-path environment having n paths where, for example, n = 3. The multi-path environment produces signal paths 6, 8 and 10 to receiver 4. Since the paths have different lengths, the signals from the paths are received by receiver 4 at slightly different times. The differing arrival times can cause interference such as inter-symbol interference.

FIG. 2 illustrates antenna 20 of receiver 4, and the angles of arrival of signals that traveled along paths 6, 8 and 10. In this example, the angle of arrival is measured with respect to a line that is normal to antenna 20. The present invention compensates for multiple signal paths by determining the angles of arrival, $\theta_1$ through $\theta_3$, of the three signal paths, and by using a beam-forming network to selectively receive one or all three of the signals from the signal paths. If the beam-forming network is used to receive only one signal, the path with the strongest signal or highest signal-to-noise ratio is selected, and provided as an output. If it desirable to increase the output signal-to-noise ratio, the signals from the three paths are time aligned and added to produce an output signal with an increased signal-to-noise ratio. The signals are time aligned by choosing the strongest signal and then correlating the other two signals with data or a training sequence in the strongest signal. The correlation determines the misalignment of the three signals so that they can be time aligned and added to increase the output signal-to-noise ratio.

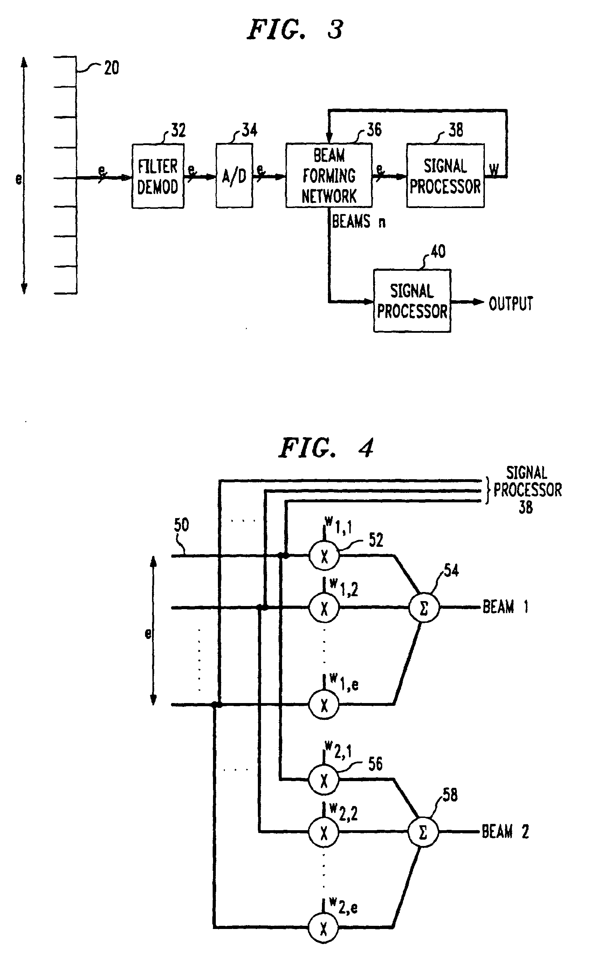

FIG. 3 includes multi-element antenna 20 having e elements. The number of elements e should be greater than or equal to the maximum number of expected signal paths plus one. Each of the elements provide an output to filter/demodulator 32. The signals from filter/demodulator 32 pass to (analog to digital converter) A/D 34 and then to beam-forming network 36. The outputs of beam-forming network 36 are passed to signal processor 38 which determines the number of signal paths and their associated angles of arrival. Processor 38 can be implemented using devices such as a microprocessor or a DSP (Digital Signal Processing) device. Weight values relating to the angles of arrival are passed from processor 38 to beam-forming network 36. Beam-forming network 36 forms a receive beam for each angle of arrival and produces outputs corresponding to each receive beam. Beam-forming network 36 can be implemented using the same type of devices used to implement processor 38. It is also possible to implement processor 38 and beam-forming network 36 using the same device.

FIG. 4 illustrates beam-forming network 36. Beam-forming network 36 is well-known in the art and produces the different receive beams by multiplying the outputs of A/D 34 by a weight W, and by summing the resulting products to form a receive beam. Several of these operations can be formed in parallel to produce a large number of receiving beams. Each input 50 receives a signal from an element of antenna 20 via filter/demodulator 32 and A/D 34. One set of inputs 50 is passed to processor 38. In addition, each input 50 is passed through a multiplier 52 where the input is multiplied by a weight W. The outputs of multiplier 52 are passed through summer 54 to form a receive signal that corresponds to a receive beam. Similarly, multipliers 56 and summer 58 are used to produce a second receive beam. Additional receive beams can be produced in a similar fashion. Methods for choosing weights W so that a receive beam selectively receives a signal arriving from a particular angle of arrival are well-known in the art.

The outputs from beam-forming network 36, which correspond to the receive beams, are passed to signal processor 40. Processor 40 can choose the strongest signal from the receive beams and provide that signal as an output. Processor 40 can be implemented using devices such as a microprocessor or DSP device. Processor 40 can also be implemented using the same device that is used to implement processor 38 and/or beam-forming network 36.

It is also possible for signal processor 40 to correlate the strongest signal with each of the weaker signals from the other receive beams to determine the time skew between the strongest signal and the weaker signals. Using this information, signal processor 40 can time align the received signals and add them to produce an output signal with a higher signal-to-noise ratio.

The output of A/D converter 34, which is passed to processor 38 via beam-forming network 36, is in the form of equation 1 which illustrates a received vector.

$$Y_k = \begin{bmatrix} y_{1,k} \\ y_{2,k} \\ y_{3,k} \\ \vdots \\ y_{e,k} \end{bmatrix}. \qquad\qquad (1)$$

The received vector $Y_k$ contains samples from each of the e elements of antenna 20 for time k. These samples may be complex values, if for example, a quadrature amplitude modulated signal is received. This procedure is carried out until L samples have been collected where L is $\geq$ e. For each received vector $Y_k$, matrix $R_k$ is formed in accordance with Equation 2.

$$R_k = Y_k \cdot Y_k^* \qquad\qquad (2)$$

Matrix $R_k$ is an e by e matrix formed by the product of matrix $Y_k$ and matrix $Y_k^*$ where matrix $Y_k^*$ is the conjugate transpose of matrix $Y_k$. Matrix or vector $Y_k^*$ is formed using matrix $Y_k$. The entries of matrix $Y_k$ are replaced with their complex conjugates, and the columns of the resulting matrix form the rows of matrix $Y_k^*$.

Equation 3 is used to form the auto-covariance matrix of the received vectors by forming the sum of matrices

$R_k$ for k = 1 to L, and then dividing that summation by L.

$$R = \sum_{k=1}^{L} \frac{R_k}{L} \approx \frac{\sum_{k=1}^{L} Y_k \cdot Y_k^*}{L} = \begin{bmatrix} r_{1,1} & r_{1,2} & \cdots & r_{1,e} \\ r_{2,1} & & & \vdots \\ r_{3,1} & & & \vdots \\ \vdots & & & \cdot \\ r_{e,1} & & & r_{e,e} \end{bmatrix} \qquad (3)$$

A singular value decomposition (SVD) is used in accordance with equation 4 to produce matrix $\Sigma$.

$$R \rightarrow U \Sigma U^* \qquad (4)$$

$$\Sigma \approx \begin{bmatrix} \sigma_{11} & 0 & \cdot & \cdot & \cdot & 0 \\ 0 & \sigma_{22} & & & & \cdot \\ \cdot & & \ddots & & & \cdot \\ \cdot & & & \sigma_{nn} & & 0 \\ \cdot & & & & \ddots & \\ 0 & \cdot & \cdot & \cdot & 0 & \sigma_{ee} \end{bmatrix} \qquad (5)$$

Singular value decomposition is well-known in the art and can be seen, for example, in Matrix Computations, pp. 16 - 20, by G. H. Golub and C. F. Van Loan, The John Hopkins University Press, Baltimore, Maryland 1983. A singular value decomposition may be executed using, for example, Jacobi methods, the QR algorithm or the Golub/Kahan SVD step. Matrix E is an e by e diagonal matrix, that is, all entries are zero except for entries on the diagonal. The entries on the diagonal of the $\Sigma$ matrix are examined to determine when the magnitude of the entries significantly decrease. The point at which there is a change in the magnitude of the entries along the diagonal of the $\Sigma$ matrix defines the value n which is the number of signal paths between transmitter 2 and receiver 4. In the example of FIGS. I and 2, n is equal to 3.

At one point along the diagonal when moving from entry 1,1 to entry e,e, there will be a decrease in the value of the entries. This decrease in value is used to determine n. Entry n,n is the last entry to have a large value relative to entries n+1, n+1 to e,e. This change in values can be determined by simply comparing the ratios between adjacent entries on the diagonal. When a ratio becomes large relative to the ratios of prior entries on the diagonal, position n,n can be determined. This is illustrated by observing equations 6.

$$\sigma_{11} / \sigma_{22} = \Delta_1$$
$$\sigma_{22} / \sigma_{33} = \Delta_2 \qquad (6)$$
$$\sigma_{nn} / \sigma_{n+1,n+1} = \Delta_n$$

The ratio $\Delta_1$ is determined by dividing $\sigma_{11}$ by $\sigma_{22}$ and ratio $\Delta_2$ is determined by dividing $\sigma_{22}$ by $\sigma_{33}$. This is continued until ratio An is located which is equal to $\sigma_{nn}$ divided by $\sigma_{n+1,n+1}$. This can be determined by setting a threshold. For example, when the average of the signal-to-noise ratios of the signals from the antenna elements is 30dB or greater, a threshold of 100 may be used. In this example, $\Delta_n$ is identified as the ratio that is greater than 100. If the signal to noise ratio is less, it may be desirable to use a lower threshold: The value of n is the column or row number of the E matrix that contains the entry $\sigma_{nn}$.

As a result of the SVD, matrix U can be written as seen in equation 7.

4

$$U = \begin{bmatrix} c_{1,1} & \cdots & c_{1,n} & c_{1,n+1} & \cdots & c_{1,e} \\ c_{2,1} & & & c_{2,n+1} & \cdots & c_{2,e} \\ \cdot & & & \vdots & & \cdot \\ \cdot & & & & & \cdot \\ \cdot & & & & & \cdot \\ \cdot & & & & & \cdot \\ c_{e,1} & \cdots & c_{e,n} & c_{e,n+1} & \cdots & c_{e,e} \end{bmatrix} \tag{7}$$

The last e-n columns of the U matrix, that is, columns n + 1 through e, are used to form a set of e-n polynomials. The polynomials are formed using entries from matrix U as shown in equations 8.

$$c_{1,n+1} + c_{2,n+1}z + c_{3,n+1}z^2 + \cdots + c_{e,n+1}z^{e-1} = 0 \quad roots \; P_{1,1} \rightarrow P_{1,e-1}$$
$$\vdots \tag{8}$$
$$c_{1,e} + c_{2,e}z + c_{3,e}z^2 + \cdots + c_{e,e}z^{e-1} = 0 \quad roots \; P_{e,1} \rightarrow P_{e,e-1}$$

The roots of each of the polynomials are determined using well-known methods such as the Newton iteration. The roots from polynomial 1 are labeled $P_{1,1}$ through $P_{1,e-1}$. The roots from polynomial 2 are labeled $P_{2,1}$ through $P_{2,e-1}$ and the roots from polynomial 3 are labeled $P_{3,1}$ through $P_{3,e-1}$. It is not necessary to calculate the roots for all e-n polynomials; however, calculating the roots of a larger number of polynomials reduces errors resulting from noise.

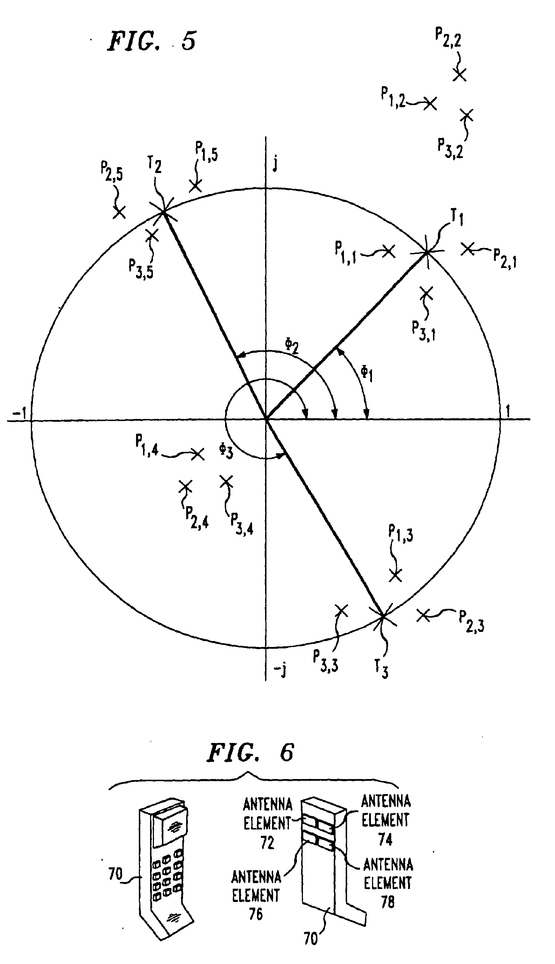

FIG. 5 illustrates a unit circle where the horizontal axis is the real axis and the vertical axis is the imaginary axis. Several roots of three polynomials are plotted. For the sake of clarity, all e-n roots of each of the three polynomials are not shown. The n roots of each polynomial that are on or close to the unit circle are the roots of interest. It should be noted that due to noise, the n roots from each of the three polynomials do not fall exactly on the unit circle, and do not coincide exactly with roots from other polynomials. As a result, there are n clusters of three roots on or near the unit circle.

The magnitude of a root, which is the square root of the sum of the squares of the real and imaginary portions of the root, is used to determine if a root is on or near the unit circle. If the root's magnitude is equal to one, the root is on the unit circle. If the root's magnitude is less than an upper threshold and more than a lower threshold, the root is considered to be near the unit circle. In situations where the average of the signal-to-noise ratios of the signals from the antenna elements is 15dB or less, an upper threshold of 1.1 and a lower threshold of 0.9 may be used. When the average of the signal-to-noise ratios is higher, a tighter set of thresholds may be used. For example, when the average of the signal-to-noise ratios is 30dB or greater, an upper threshold of 1.05 and a lower threshold of 0.95 may be used.

After determining which groups or clusters of roots constitute the n groups that are on or near the unit circle, a point $T_m$ (m = 1 to n) associated with each group of roots is found. The point $T_m$ is the point on the unit circle that is closest to a centroid for a particular group of roots. The centroid of each group of roots is calculated by using a method such as forming the average of the imaginary portions of the roots in a group, and forming the average of the real portions of the roots in a group. The imaginary average and the real average form the imaginary and real portions of the centroid, respectively.

In reference to FIG. 5, three groups of three roots ($P_{1,1}$, $P_{2,1}$, $P_{3,1}$; $P_{1,3}$, $P_{2,3}$, $P_{3,3}$; and $P_{1,5}$, $P_{2,5}$, $P_{3,5}$) are clustered near the unit circle, and can be considered on or near the unit circle. In this example there are three paths between the transmitter and receiver (n is equal to 3),therefore it is consistent that three groups of roots are on or near the unit circle. For each group of roots, a centroid is calculated to find points $T_{m=1}$ through $T_{m=n=3}$

The relationship between points $T_m$ and angles of arrival $\theta_m$ are specified in equation 9.

$$T_m = e^{\frac{-j \omega d \sin \theta_m}{c}} \tag{9}$$

where $\omega$ is $2\pi$ times the carrier frequency of the transmitted signal, d is the distance between the antenna elements and c is the speed of light Once points $T_m$ are found, the angles of arrival are determined because the values of all of the other variables in equation 9 are known. The actual values of the angles of arrival $\theta_{m=1}$ to $\theta_{m=n=3}$ may be calculated in accordance with equation 9 to obtain the weights for beam-forming network 36; however, it is not necessary to calculate the values of the angles of arrival to calculate the weights w for beam-forming network 36. The weights corresponding to a receive beam for angle of arrival $\theta_m$ are calculated by forming matrix $A_m$ as seen in equation 10.

$$A_m = \begin{bmatrix} 1 \\ T_m \\ T_m^2 \\ T_m^3 \\ \vdots \\ \vdots \\ T_m^{e-1} \end{bmatrix} \quad . \tag{10}$$

Matrix $A_m$ is used in accordance with equation 11 to form weight matrix $W_m$ which contains the weights to produce a receive beam corresponding to angle of arrival $\theta_m$.

$$W_m = \begin{bmatrix} W_{m,1} \\ W_{m,2} \\ \vdots \\ W_{m,e} \end{bmatrix} = \frac{R^{-1} A_m}{A_m^* R^{-1} A_m} \tag{11}$$

where $R^{-1}$ is the mverse of the auto-covanance matrix R in equation 3, and $a_m^*$ is the $a_m^*$ conjugate transpose of $A_m$. When m=1, weights $W_{1,1}$, $W_{1,2}$, through $W_{1,e}$ are the entries of matrix $W_{m=1}$. Here weights are provided to multipliers 52 of FIG. 4 to form a receive beam corresponding to angle of arrival $\theta_{m-1}$. Likewise, when m=2, weights $W_{2,1}$ through $W_{2,e}$ are provided to multipliers 56 of FIG. 4 to form a receive beam corresponding to angle of arrival $\theta_{m=2}$.

After determining the weights for each angle of arrival, processor 38 provides the weights to beam-forming network 36 so that a receive beam is formed for each of the angles of arrival. As a result, the signal on each path between transmitter 2 and receiver 4 is received by a separate receive beam. The output from each receive beam is passed to signal processor 40. Signal processor 40 picks the strongest of the signals, that is the signal with the highest signal-to-noise ratio, and passes the signal to the output. It is also possible to correlate each of the weaker signals with the strongest signal to determine the time misalignment between the weaker signals and the stronger signal. Once the misalignment is known, the signals can be time aligned and added to increase the signal-to-noise ratio of the output signal. The signals from each of the beams should be time aligned because each beam receives a signal that has traveled over a different distance and therefore, took a different amount of time to travel from transmitter 2 to receiver 4.

The correlation is carried out by correlating the data or symbols in the strongest signal with the data or symbols in the weaker signals. It is also possible to correlate the signals by correlating a training sequence in the stronger signal with the training sequences in the weaker signals. It should be noted that a training sequence is not required and that the present invention can determine the number of signal paths and compensate for them blindly, that is, without a training sequence.

It should also be noted that for time aligning signals, it is desirable that A/D 34 sample at least eight times the symbol or data rate, and that for the purposes of determining signal paths and their angles of arrival, it is sufficient for A/D 34 to sample at two times the symbol or data rate.

In a communication system where more than one transmitter is used to transmit on the same frequency or channel, such as in a cellular communication system, the present invention may be used to compensate for inter-transmitter or inter-cell interference. Inter-transmitter interference occurs when the signal from the transmitter of interest, which in a cellular system is the transmitter associated with the cell within which the receiver is located, is corrupted by signals received from one or more other transmitters (interfering transmitters). The interference is decreased by eliminating signals that are from an interfering transmitter. This is carried out by determining the signal paths and angles of arrival in two steps. The first step involves determining the signal paths and angles of arrival associated with signals from interfering transmitter(s) or cell(s), before the transmitter or cell of interest begins transmitting the signal to be received. After determining the angles of arrival associated with the interfering cell(s) or transmitter(s), the signal paths and angles of arrival are determined while receiving signals from both the cell of interest and the interfering cell(s). After determining all of the angles of arrival, receive beams are not formed for the angles of arrival previously identified as coming from an interfering cell(s), and receive beams are formed for angles of arrival associated with signals coming from the cell of interest.

The present invention may also decrease inter-transmitter interference in broadband communication systems, such as CDMA (code division multiple access) systems. In a CDMA system, a received signal is correlated with a pseudo-random code to eliminate a signal from an interfering transmitter; however, when the interfering transmitter is particularly strong, the interfering signal may not be eliminated by the correlation. As described above, the signal from the interfering transmitter can be reduced or eliminated by forming receive beams that correspond to the desired signal and by not forming receive beams that correspond to the interfering signal.

FIG. 6 illustrates a front and rear view of cellular telephone 70. The front view illustrates a display and keypad. The rear view illustrates a multi-element antenna with elements 72, 74, 76 and 78. Cellular telephone 70 uses the antenna elements to form receive beams that correspond to angles of arrival in accordance with the above-described techniques. The receive beams may be used to receive a signal from one or more signal paths, and they may be used to reduce inter-cell or inter-transmitter interference.

Telephone 70 may be provided with many other antenna configurations. The telephone may use additional elements in the same configuration as FIG. 6, or elements in a different configuration. It is also possible to use a multi-element antenna that is remote from a telephone, for example, telephone 70 may be in communication with a multi-element antenna mounted on an automobile.

### Claims

1. A method of receiving communication signals in a multi-path environment, comprising the steps of:

   receiving a plurality of signals having a plurality of angles of arrival ($\theta_1...\theta_m$) using a plurality (e) of antenna elements, said plurality of elements providing a plurality of element signals ($y_e$) **characterized by** the steps of: sampling said plurality of element signals at a first time to form an unweighted first sample set ($Y_{K=1}$) and sampling said plurality of element signals at a second time to form an unweighted second sample set ($Y_{K=2}$), said first and said second sample sets belonging to a plurality of sample sets having at least two sample sets; using said plurality of sample sets to calculate at least a first ($W_{m=1}$) and a second ($W_{m=2}$) set of weights, said first set of weights being used to form a first receive beam corresponding to a first angle of arrival ($\theta_{m=1}$) and said second set of weights being used to form a second receive beam corresponding to a second angle of arrival ($\theta_{m-2}$), said first and second angles of arrival belonging to said plurality of angles of arrival; and time aligning and summing a first beam signal (BEAM1) and a second beam signal (BEAM2) by correlating a sequence in said first beam signal with the same sequence contained in said second beam signal, said first beam signal received by said first receive beam and said second beam signal received by said second receive beam, said first and second beam signals belonging to said plurality of signals.

2. The method of receiving communications signals according to claim 1, while reducing intertransmitter interference, **characterized by** the steps of:

   performing the receiving step to receive a first plurality of signals (88) from a first transmitter (90) while a second transmitter (92) is not transmitting, said plurality of elements providing a first plurality of element signals and said first plurality of signals having a first plurality of angles of arrival; performing the sampling step at a first time to form a first sample set ($Y_{k=1}$) and at a second time to form a second sample set ($Y_{K=2}$), said first and said second sample sets belonging to a first plurality of sample sets having at least two sample sets; using said first plurality of sample sets to calculate a first angle of arrival ($\theta_m$) belonging to said first plurality of angles of arrival; performing the receiving step to receive a second plurality of signals comprising first signals (88) from said first transmitter (90) and second signals (94) from said second transmitter (92), said plurality of elements providing a second plurality of element signals and said second plurality of signals having a second plurality of angles of arrival;

performing the sampling step at a third time to form a third sample set ($Y_{K=3}$) and at a fourth time to form a fourth sample set ($Y_{K=4}$), said third and said fourth sample sets belonging to a second plurality of sample sets having at least two sample sets;

using said second plurality of sample sets to calculate at least a first and a second set of weights, said first set of weights ($W_{m=1}$) being used to form a first receive beam corresponding to a second angle of arrival and said second set of weights ($W_{m=2}$) being used to form a second receive beam corresponding to a third angle of arrival, said second and third angles of arrival belonging to said second plurality of angles of arrival and not being equal to said first angle of arrival; and

performing the time aligning and summing step on a first beam signal (BEAM1) and a second beam (BEAM2) signal by correlating a sequence in said first beam signal with the same sequence contained in said second beam signal, said first beam signal received by said first receive beam and said second beam signal received by said second receive beam, said first and second beam signals belonging to said second plurality of signals.

## Patentansprüche

1. Verfahren zum Empfangen von Kommunikationssignalen in einer Mehrwegeumgebung, mit folgenden Schritten:

   Empfangen von Signalen in einer Mehrzahl von Ankunftswinkeln ($\theta_1...\theta_m$) unter Verwendung der Mehrzahl (e) von Antennenelementen, die eine Mehrzahl von Elementsignalen ($y_e$) bereitstellen, **gekennzeichnet durch** folgende Schritte:

   Abtasten der Mehrzahl von Elementsignalen zu einer ersten Zeit zum Bilden einer ungewichteten ersten Abtastmenge ($Y_{K=1}$) und Abtasten der Mehrzahl der Elementsignale zu einer zweiten Zeit zum Bilden einer ungewichteten zweiten Abtastmenge ($Y_{K=2}$), wobei die erste und zweite Abtastmenge zu einer Mehrzahl von Abtastmengen mit mindestens zwei Abtastmengen gehören;

   Verwenden der Mehrzahl von Abtastmengen zum Berechnen von mindestens einer ersten ($W_{m=1}$) und einer zweiten ($W_{m=2}$) Menge von Gewichten, wobei die erste Menge von Gewichten zum Bilden eines ersten Empfangsstrahls entsprechend einem ersten Ankunftswinkel ($\theta_{m=1}$) benutzt wird und die zweite Menge von Gewichten zum Bilden eines zweiten Empfangsstrahls entsprechend einem zweiten Ankunfts-winkel ($\theta_{m=2}$) benutzt wird, wobei der erste und zweite Ankunftswinkel zu der Mehrzahl von Ankunftswinkeln gehören; und

   zeitliches Ausrichten und Summieren eines ersten Strahlsignals (BEAM1) und eines zweiten Strahlsignals (BEAM2) **durch** Korrelieren einer Folge in dem ersten Strahlsignal mit der gleichen, im zweiten Strahlsignal enthaltenen Folge, wobei das erste Strahlsignal **durch** den ersten Empfangsstrahl und das zweite Strahlsignal **durch** den zweiten Empfangsstrahl empfangen wird, wobei das erste und zweite Strahlsignal zu der Mehrzahl von Signalen gehören.

2. Verfahren zum Empfangen von Kommunikationssignalen nach Anspruch 1, bei gleichzeitiger Verringerung der Interferenz zwischen Sendern, **gekennzeichnet durch** folgende Schritte:

   Durchführen des Schritts des Empfangens zum Empfangen einer ersten Mehrzahl von Signalen (88) von einem ersten Sender (90), während ein zweiter Sender (92) nicht überträgt, wobei die Mehrzahl von Elementen eine erste Mehrzahl von Elementsignalen bereitstellt und die erste Mehrzahl von Signalen eine erste Mehrzahl von Ankunftswinkeln aufweist;

   Durchführen des Schritts des Abtastens zu einer ersten Zeit zum Bilden einer ersten Abtastmenge ($Y_{K=1}$) und zu einer zweiten Zeit zum Bilden einer zweiten Abtastmenge ($Y_{K=2}$), wobei die erste und die zweite Abtastmenge zu einer ersten Mehrzahl von Abtastmengen mit mindestens zwei Abtastmengen gehören;

   Verwenden der ersten Mehrzahl von Abtastmengen zum Berechnen eines ersten Ankunftswinkels ($\theta_m$), der zu der ersten Mehrzahl von Ankunftswinkeln gehört;

   Durchführen des Schritts des Empfangens zum Empfangen einer zweiten Mehrzahl von Signalen mit ersten Signalen (88) vom ersten Sender (90) und zweiten Signalen (94) vom zweiten Sender (92), wobei die Mehrzahl von Elementen eine zweite Mehrzahl von Elementsignalen bereitstellt und die zweite Mehrzahl von Signalen eine zweite Mehrzahl von Ankunftswinkeln aufweist;

   Durchführen des Schritts des Abtastens zu einer dritten Zeit zum Bilden einer dritten Abtastmenge ($Y_{K=3}$) und zu einer vierten Zeit zum Bilden einer vierten Abtastmenge ($Y_{K=4}$), wobei die erste und vierte Abtastmenge zu einer zweiten Mehrzahl von Abtastmengen mit mindestens zwei Abtastmengen gehören;

Verwenden der zweiten Mehrzahl von Abtastmengen zum Berechnen von mindestens einer ersten und einer zweiten Menge von Gewichten, wobei die erste Menge von Gewichten ($W_{m=1}$) zum Bilden eines ersten Empfangsstrahls entsprechend einem zweiten Ankunftswinkel benutzt wird und die zweite Menge von Gewichten ($W_{m=2}$) zum Bilden eines zweiten Empfangsstrahls entsprechend einem dritten Ankunftswinkel benutzt wird, wobei der zweite und dritte Ankunftswinkel zu der zweiten Mehrzahl von Ankunftswinkeln gehören und nicht gleich dem ersten Ankunftswinkel sind; und

Durchführen des Schritts des zeitlichen Ausrichtens und Summierens an einem ersten Strahlsignal (BEAM1) und einem zweiten Strahlsignal (BEAM2) durch Korrelieren einer Folge in dem ersten Strahlsignal mit der gleichen im zweiten Strahlsignal enthaltenen Folge, wobei das erste Strahlsignal **durch** den ersten Empfangsstrahl und das zweiten Strahlsignal **durch** den zweiten Empfangsstrahl empfangen wird, wobei das erste und das zweite Strahlsignal zur zweiten Mehrzahl von Signalen gehören.

## Revendications

1.  Procédé de réception de signaux de communication dans un environnement par trajets multiples comprenant les étapes de :

    réception d'une pluralité de signaux ayant une pluralité d'angles d'arrivée ($\theta 1...\theta_m$) utilisant une pluralité (e) d'éléments d'antennes, ladite pluralité d'éléments fournissant une pluralité de signaux d'éléments ($y_e$) **caractérisée par** les étapes d' :

    échantillonnage de ladite pluralité de signaux d'éléments à un premier moment pour former un premier jeu d'échantillons non pondéré ($Y_{K=1}$) et

    échantillonnage de ladite pluralité de signaux d'éléments à un deuxième moment pour former un deuxième jeu d'échantillons non pondéré ($Y_{k=2}$), ledit premier et ledit deuxième jeux d'échantillons appartenant à une pluralité de jeux d'échantillons ayant au moins deux jeux d'échantillons ;

    utilisation de ladite pluralité de jeux d'échantillons pour calculer au moins un premier ($W_{m=1}$) et un deuxième ($W_{m=2}$) jeux de pondérations, ledit premier jeu de pondérations étant utilisé pour former un premier faisceau de réception correspondant à un premier angle d'arrivée ($\theta_{m=1}$) et ledit deuxième jeu de pondérations étant utilisé pour former un deuxième faisceau de réception correspondant à un deuxième angle d'arrivée ($\theta_{m=2}$), lesdits premier et deuxième angles d'arrivée appartenant à ladite pluralité d'angles d'arrivée ; et

    réglage de temporisation et sommation d'un premier signal de faisceau (BEAM1) et d'un deuxième signal de faisceau (BEAM2) en corrélant une séquence dans ledit premier signal de faisceau avec la même séquence contenue dans ledit deuxième signal de faisceau, ledit premier signal de faisceau étant reçu par ledit premier faisceau de réception et

    ledit deuxième signal de faisceau étant reçu par ledit deuxième faisceau de réception, lesdits premier et deuxième signaux de faisceau appartenant à ladite pluralité de signaux.

2.  Procédé de réception de signaux de communication selon la revendication 1, bien que réduisant une interférence inter-transmetteur, **caractérisé par** les étapes d' :

    exécution de l'étape de réception pour recevoir une première pluralité de signaux (88) d'un premier émetteur (90) tandis qu'un deuxième émetteur (92) n'émet pas, ladite pluralité d'éléments fournissant une première pluralité de signaux d'éléments et ladite première pluralité de signaux ayant une première pluralité d'angles d'arrivée ;

    exécution de l'étape d'échantillonnage à un premier moment pour former un premier jeu d'échantillons ($Y_{K=1}$) et à un deuxième moment pour former un deuxième jeu d'échantillons ($Y_{K=2}$), ledit premier et ledit deuxième jeux d'échantillons appartenant à une première pluralité de jeux d'échantillons ayant au moins deux jeux d'échantillons ;

    utilisation de ladite première pluralité de jeux d'échantillons pour calculer un premier angle d'arrivée ($\theta_m$) appartenant à ladite première pluralité d'angles d'arrivée ;

    exécution de l'étape de réception pour recevoir une deuxième pluralité de signaux comprenant des premiers signaux (88) dudit premier émetteur (90) et des deuxièmes signaux (94) dudit deuxième émetteur (92), ladite pluralité d'éléments fournissant une deuxième pluralité de signaux d'éléments et ladite deuxième pluralité de signaux ayant une deuxième pluralité d'angles d'arrivée ;

    exécution de l'étape d'échantillonnage à un troisième moment pour former un troisième jeu d'échantillons ($Y_{K=3}$)

et à un quatrième moment pour former un quatrième jeu d'échantillons ($Y_{K=4}$), ledit troisième et ledit quatrième jeux d'échantillons appartenant à une deuxième pluralité de jeux d'échantillons ayant au moins deux jeux d'échantillons ;

utilisation de ladite deuxième pluralité de jeux d'échantillons pour calculer au moins un premier et un deuxième jeux de pondérations, ledit premier jeu de pondérations ($W_{m=1}$) étant utilisé pour former un premier faisceau de réception correspondant à un deuxième angle d'arrivée et ledit deuxième jeu de pondérations ($W_{m=2}$) étant utilisé pour former un deuxième faisceau de réception correspondant à un troisième angle d'arrivée, lesdits deuxième et troisième angles d'arrivée appartenant à ladite deuxième pluralité d'angles d'arrivée et n'étant pas égaux audit premier angle d'arrivée ; et

exécution de l'étape de réglage de temporisation et de sommation sur un premier signal de faisceau (BEAM1) et un deuxième signal de faisceau (BEAM2) en corrélant une séquence dans ledit premier signal de faisceau avec la même séquence contenue dans ledit deuxième signal de faisceau, ledit premier signal de faisceau étant reçu par ledit premier faisceau de réception et ledit deuxième signal de faisceau étant reçu par ledit deuxième faisceau de réception, lesdits premier et deuxième signaux de faisceau appartenant à ladite deuxième pluralité de signaux.

## FIG. 1

## FIG. 2

## FIG. 3

## FIG. 4

**FIG. 5**

**FIG. 6**